# EUROPEAN PATENT APPLICATION

(11) **EP 1 325 680 A1**
(43) Date of publication of application: **09.07.2003**
(21) Application number: 01205158.7
(22) Date of filing: 26.12.2001
(51) Int. Cl.: A23L 1/187, A23L 1/212, A23P 1/16

(54) **Mousse**

(71) Applicant: SOCIETE DES PRODUITS NESTLE S.A., 1800 Vevey (CH)
(72) Inventor: Mikota, Paul, 1091 Grandvaux (CH); Macinnes, William Michael, 1005 Lausanne (CH); Sievert, Birgit, 1066 Epalinges (CH); Michel, Martin, 1004 Lausanne (CH)
(74) Representative: Wavre, Claude-Alain

(57) **Abstract**

Powdered mousse mix comprising a source of carbohydrate, a source of protein, a source of fat and particles of a gas generating ingredient, the particles of gas generating ingredient comprising a matrix containing carbohydrate and protein and entrapped gas under pressure, and the gas being present in an amount to release at least 1 ml of gas per gram of gas generating ingredient at ambient conditions upon contacting with a liquid.

## Description

The present invention relates to a powdered food mix suitable for the instant reconstitution of a mousse by simple contacting with a liquid and gentle stirring.

The most commonly recognized mousse product is milk based chocolate, vanilla or stawberry flavored dessert in which air is dispersed in a continuous phase. The continuous phase may be either water based or fat based or an oil in water or water in oil emulsion.

The preparation of mousse-like desserts and entremets is allways a complicated recipe involving differents steps of mixing, stirring, whipping. Moreover, it is a time consuming procedure and for which the result may not be fully guaranteed because of phase separation, syneresis and gas explusion.

Children are particulary lovers of this kind of product because of its soft, light and fluffy texture. However, because of the complicated manufacture procedure, children are not permitted nor able to prepare a mousse on their own. Indeed, food mixers or food blendors or wire whisks, especially electrical ones, are rarely recommended for child use. Besides the risk of injury, parents are not really keen on having their children do cooking with such heavy equipment because of risk of soiling.

Some alternative solutions exist and relate to the use of dry mixes made of sugar, fat and emulsifiers whose role is to stabilise the emulsion as exposed in DE 2263301, FR 2121863, DE 3117940 or US 4338347. For exemple, US 4338347 provides a powdered food mix suitable for mixing with a liquid to obtain a mousse, comprising fat, sugar, thickener and whipping agent. This whipping agent comprises sugar, caseinate, lipid and emulsifiers. The preparation of a mousse with such a mix still involves a whipping step by beating and/or vigorously blending with mecanical whipper for at least half a minute.

An other alternative solution may consist in manufacturing a mousse product by mixing and whipping the mixture until the desired overrun is obtained and finally drying the formed product while maintaining the gas bubble entrapped in the matrix of the dried mousse. Such technology is proposed in SU 824954. Even if the reconstitution procedure is facilitated, the manufacturing process of the dried mix is complicated, time consuming and very expensive as well.

Finally, another alternative consists in using a product capable of releasing or generating carbon dioxide upon contact with water known as carbonating complex in EP 359959. This patent discloses an instant mousse mix comprising sugar, flavouring and a dry carbonating complex. This complex is prepared by reacting a carbohydrate with metal hydroxide or oxide at a temperature not exceeding 25°C to form a carbohydrate/metal hydroxyde adduct to which carbon dioxide is then introduced to form the complex. The complex is immediately dried by freeze drying. If this carbonating complex is suitable for gas generation in liquid products it still requires vigorous shaking and/or stirring with a wire wisk for at least half a minute to develop the typical aerated, firm and spoonable texture of a mousse. Indeed such a gas generation complex is adapted to liquids or fluid preparations for which the low viscosity facilitates the uniform generation of dispersed air bubbles. In the case of the preparation of mousse, whose rheological properties are closer to spoonable or spreadable paste than to fluid or flowable products like beverages or sauces, it renders compulsory a vigourous shaking or whisking.

Thus, it is an object of the present invention to provide a food mix in the form of a powder suitable for the rapid and simple preparation of a mousse by simply and gently blending the mix with a liquid with a spoon or fork, without significant shaking or whipping.

Accordingly, the present invention provides a powdered mousse mix comprising a source of carbohydrate, a source of protein, a source of fat and particles of a gas generating ingredient, the particles of gas generating ingredient comprising a matrix containing carbohydrate and protein and entrapped gas under pressure, and the gas being present in an amount to release at least 1 ml of gas per gram of gas generating ingredient at ambient conditions upon contacting with a liquid.

Throughout the present description and claims, the expression "powdered mousse mix" means a powdered food mix suitable for the instant reconstitution of a mousse by simple contacting with a liquid and gentle stirring.

By the expression "ambient conditions", it is mainly understood the ambient condition of pressure, namely about 0.95 to 1.2 bar.

In a further aspect, the present invention provides a method for quickly reconstituting a mousse by gently and shortly stirring with a liquid, a powdered mousse mix comprising a source of carbohydrate, a source of protein, a source of fat and particles of a gas generating ingredient, the particles of gas generating ingredient comprising a matrix containing carbohydrate and protein and entrapped gas under pressure, and the gas being present in an amount to release at least 1 ml of gas per gram of gas generating ingredient at ambient conditions upon contacting with a liquid.

Another further aspect of the present invention concerns the use of a gas generating ingredient comprising a matrix containing carbohydrate and protein and entrapped gas under pressure, the gas being present in an amount to release at least 1 ml of gas per gram of gas generating ingredient at ambient conditions upon contacting with a liquid, in a powdered food mix containing a source of proteins, a source of carbohydrates and a source of fat for the reconstitution of a mousse by addition of the powdered food mix to the liquid and gentle stirring.
The expression "gentle stirring" hereby refers to the fact that after contacting with a liquid, the obtained mixture is simply stirred and intimately mixed thanks to a soft, slow, continuous and uniform movement.
The particles of gas generating ingredient provide the advantage that, when included in the powdered food mix and contacted with a liquid they are able to generate/induce the rapid and powerful formation of a great volume of gas. Hence, upon contacting with a liquid, only a gentle and moderate stirring is necessary in order to allow uniform hydration and dissolution of all the ingredients of the mix.
It has surprisingly been observed that it is not necessary to apply any vigorous mixing, shaking or whisking after contacting with a liquid to obtain a mousse. Indeed, a simple gentle stirring with a spoon for about 30-60 seconds, for example, allows to obtain a nice mousse showing uniformly dispersed gas bubbles. The mousse obtained may show a firmness similar to a spoonable chocolate mousse, for example. However, the viscosity of the obtained mousse is not critical and depending upon the ratio liquid:powdered food mix, among other parameters, this viscosity may range from a firm mousse to a foamy slurry, for example.
It is thus very surprising that by a simple gentle intimate mixing of the powdery ingredient of the mix according to the present invention with a liquid, a perfect and pleasant mousse may thus be obtained. Moreover it is non-recommended to apply a vigorous shaking or mixing for the reconstitution of the mousse.

The ratio liquid:powdered food mix may range from about 1:1 to 3.5:1, preferably from about 2:1 to about 3:1. This ratio will depend on the desired viscosity or firmness of the final mousse or may also depend on the quantity of the different ingredients of the powdered food mix.

Preferably, the gas generating ingredient generates a volume of gas of about 5-20 ml/g of gas generating ingredient when contacted with a liquid. Of course, the volume of generated gas formed in the mousse will depend on the quantity of gas generating ingredient in the powdered food mix. The relative quantity of gas generating ingredient in the powder mix according to the present invention may range from 10 to 50% by weight, preferably from about 20 to 30% by weight. Furthermore, the generated volume may also depend on the liquid composition and temperature. The gas generating agent may in this way generate an overrun of the mousse of from about 50 to 150, for example.

The liquid with which the powdered food mix according to the present invention may be contacted may be water or any suitable food acceptable liquid. Suitable liquids include water, milk, cream, fruit juice, but also vegetable or meat bouillon.

The milk or cream may origin from either cow, buffalo, sheep, goat, camel or any other domestic animal, for example.

The liquid used for the reconstitution of the mousse may indifferently be warm or cold. The suitable temperature range of the liquid used for the reconstitution of a mousse may range from about 5 to 100 °C, preferably from 30 to 80°C and more preferably from 18 to 50°C.
The mousse obtained by gentle mixing of the powdered food mix according to the present invention with liquid may be eaten just after reconstitution or allowed to stand since the generated entrapped gas in the mousse thus formed may be retained for about from 30 minutes to several hours, depending on the viscosity of the mousse obtained and on the quantity of gas contained.

The source of protein of the powdered food mix according to the present invention may be any food acceptable one either from vegetable origin such as soy proteins, pulses proteins or wheat proteins, or animal origin such as milk proteins, skimmed milk powder, whey powder, caseinate, yoghurt powder or any other fermented dairy based powder, used alone or in combination, for example.

The source of fat of the powdered food mix according to the present invention may be any food acceptable fat from either animal or vegetable origin used alone or in combination. It may be hydrogenated or not and may then be selected from the group comprising milk fat, palm fat, coconut fat, peanut oil and sunflower oil, used alone or in combination, for exemple.
The amount of fat in the powdered food mix according to the present invention may range from about 3 to 30%, preferably from 5 to 25% by weight of the mix, for example. The more the product contains fat, the more the product exhibits an agreable and creamy mouthfeel.

The source of carbohydrate of the powdered food mix according to the present invention may be any suitable mono-, di-, tri, and/or polysaccharides, used in combination with a starch, especially with a starch of cereal origin. Such carbohydrates may be glucose, saccharose, lactose, galactose, fructose, maltose, glucose syrup and/or maltodextrine, for example, used in combination with a starch, especially with a starch of cereal origin.

A starch of cereal origin may be provided in isolated form or in form of a cereal product such as a cereal flour, for example. Such a cereal flour may be selected in the group comprising wheat, maize, rice, oat, barley, rye, buckwheat and millet flour, used alone or in combination, for example. Preferably, the suitable cereal flour has been subjected to a pre-gelatinization treatment in order to facilitate the dispersion in the liquid without lumps. Such pre-gelatinization treatment may be achieved by cooking-extruding a mixture of flour and water presenting a dry matter of about 65 to 90%. Such a mixture may be introduced in the feeding section of a cooker-extruder and subjected to a cooking-extruding step in usual conditions, like 120 to 140°C for about 20 to 60 secondes.
The mixture to be extruded may also comprise sugar, starch, honey, fat, powdered milk solid, for example. The resulting extruded mixture may thus serve as complete base for the powdered food mix according to the present invention in which the gas generating ingredient will be added to by simple mixing.
This cereal base may also be obtained by traditional cooking of a mixture of cereal flour with water (dry matter content about 40-60%) followed by a roller drying and milling step.
The cereal base suitable for the manufacture of the product according to the invention may advantageously be supplemented by any suitable dairy base allowing to obtain a complete nutritional product for children, for example. For example, as suitable dairy base, milk powder, whey powder may be used. A cereal based powder suitable for the powder mix according to the present invention may be a product like the one sold under the brand NESTUM®, for example.
A complete dairy cereal base suitable for the powder mix according to the present invention may be a product like the one sold under the brand CERELAC®, for example. Such product contains pre-gelatinized cereal flour, dairy fat, milk protein and sugar. Of course, adjustement regarding the quantity of sugar and fat in the powdered food mix will depend on the desired product to be obtained. Thus, the powdered food mix may contain about 3-25%, typically 9% fat, and 8-17%, typically 15% protein, for example.

If desired, the powdered food mix according to the present invention may contain other components such as artificial sweeteners, emulsifiers, stabilisers, flowing agents, colours, flavours, aromas, and the like. Suitable artificial sweeteners include saccharin, cyclamates, acetosulfame, L-aspartyl based sweeteners such as aspartame, and mixtures of these. Suitable emulsifiers include monoglycerides, diglycerides, lecithin, diacetyl tartaric acid esters of mono-diglycerides (data esters), and mixtures thereof.

The present invention is not limited to sweet mousse products, and cheese, meat, vegetable mousse type products may also be obtained. The powdered food mix according to the present invention may not contain any sweeteners and may be flavoured accordingly. Thus, if desired, the powdered food mix according to the present invention may contain a powdered vegetable or a powdered cheese. A powdered vegetable may be selected from the group comprising carrot, cauliflower, tomato, pumpkin and potato powder, used alone or in combination, for example.
However, in the frame of providing sweet mousse like dessert, the powdered food mix according to the present invention may contain a source of fruit in the form of fruit extract or fruit aroma or dehydrated fruit purée as diverse as banana, apple, strawberry, pear, orange or prune, for example.

The typical granulometry of the powdered food mix according to the present invention may range from about 200 to 500 microns.

If desired, the powdered food mix according to the present invention may also contain pieces of food that are distinguishable with the naked eye. For example, suitable pieces of food may include pieces of dried fruit, nuts, cereals flakes, pieces of cereals, seeds, pieces of chocolate, pieces of dried vegetables, pieces of crustacea, or pieces of cheese, for example.

The powdered food mix according to the present invention may also comprise prebiotics like fibers, vitamins and minerals as well.

The gas generating ingredient is primarily a matrix containing carbohydrate, protein and entrapped gas under pressure. The carbohydrate in the matrix may be any suitable carbohydrate that includes lactose, dextrose, fructose, sucrose, maltodextrine, corn syrup, starch, modified starch, cyclodextrine, and mixtures thereof, for example. Mixture containing maltodextrine are preferred and for example, the carbohydrate may be a mixture of about 40% to about 80% by weight of maltodextrine, sucrose and lactose. The carbohydrate may provide from about 40 to 98% of the matrix and preferably from about 70 to 90%.
The protein of the matrix of the gas generating ingredient may be any suitable protein or mixture of proteins from either animal or vegetable origin. Suitable examples include milk protein, soy protein, wheat protein, gelatin, for example. The protein provide from about 2 to about 25% by weight of the matrix and preferably from about 5 to about 10%.

A gas is entrapped in the matrix. The gas may be any suitable food acceptable gas like nitrogen, carbon dioxide or air and mixtures thereof, for example. Inert gas are preferred. To provide the enhanced and easy mousse reconstitution, the gas is introduced in the matrix under pressure, at above about 100 kPa. Preferably, the gas is introduced into the matrix at above about 500 kPa, for example at about 1 MPa to about 6 MPa.
The gas may be introduced into the matrix of the gas generating ingredient by any suitable process. The gas may be injected, at a pressure of about 500 kPa to about 6 MPa, into an aqueous matrix concentrate having solid content above 30% by weight. The gassed aqueous matrix is then spray dried to powder. The particles are then subjected to an inert gas atmosphere at high pressure and at temperature above the glass transition of the particles. The pressure may range from about 100 kPa to about 6 MPa. The temperature needed will depend upon the composition of the particles since this will influence the glass transition temperature. Temperatures more than about 50°C above the glass transition temperature are probably best avoided. The particles are then cooled under pressure to ensure entrapment of the gas.

The mix according to the present invention allows an easy and rapid reconstitution of a mousse as generally appreciated by children. It is also noticeable that in the case of children, the present invention has several and determining advantages. Thus, children aiming to make their own mousse do not need any complicated and dangerous whisky wire or blendor or food mixer. Therefore the risks of injury, breakage of cooking material as well as soiling everything around are avoided. Children may thus prepare their mousse on their own without parent assistance in a simple an safe manner.

### EXAMPLE: Chocolate mousse

A dry mix of about 70% wheat flour, about 15% sugar and about 5% cocoa powder is incorporated into water. A mix of milk and about 10% vegetable fat and micronutrients are added. The resulting slurry is heated to above 100°C, roller dried and milled to obtain the correct granulometry. The cereal based powder thus obtained represents 45% ww of the finished product.

Spray dried skim milk powder and spray dried whole milk powder ared mixed (in an amount such that the fat content of the finished product is 9%) and are added to the cereal base powder as mentioned above. This dairy part represents 35% ww of the finished product.

A gas generating ingredient is manufactured in the following way (see Example 1 of WO 01/08504 A1):

A mixture of non-fat milk solids, caseinate, maltodextrin, lactose and sucrose is fed into an extruder. The moisture content is less than about 15% by weight. The temperature of the mixture in the extruder is raised to about 50 to 130°C to melt the mixture and form a matrix. Nitrogen gas is then injected into the molten matrix at about 2MPa. The gasified molten matrix is extruded through a 2 mm orifice into a pressure zone in which the pressure is maintained at about 3.5 MPa and the temperature at about 20°C. The extrudate remains in the pressure zone until cooled to ambient temperature. The cured extrudate is then comminuted to a powder of particles of size about 0.5 mm to about 3 mm.

The gas generating agent thus obtained (20% ww of the finished product) is dry mixed to the above mentioned powder mix.

50 g of the mousse powder are added to 110 ml of water with 60°C, in a beaker, and manually stirred with a spoon. The finished product is a chocolate mousse with light texture and a pleasant mouthfeel. It can be directly consumed warm, or, if required, it can be stored in a refrigerator and consumed after some hours.

## Claims

1. Powdered mousse mix comprising a source of carbohydrate, a source of protein, a source of fat and particles of a gas generating ingredient, the particles of gas generating ingredient comprising a matrix containing carbohydrate and protein and entrapped gas under pressure, and the gas being present in an amount to release at least 1 ml of gas per gram of gas generating ingredient at ambient conditions upon contacting with a liquid.

2. Powdered mousse mix according to claim 1, **characterized in that** the gas generating ingredient generates a volume of gas of 5-20 ml/g of gas generating ingredient when contacted with a liquid.

3. Powdered mousse mix according to claim 1, **characterized in that** the relative quantity of gas generating ingredient in the powder mix ranges from 10 to 50% by weight.

4. Powdered mousse mix according to claim 1, **characterized in that** the gas generating ingredient generates an overrun of the mousse of from 50 to 150, when the mousse is reconstituted by contacting with a liquid and gentle stirring.

5. Powdered mousse mix according to claim 1, **characterized in that** the source of carbohydrates is glucose, saccharose, lactose, galactose, fructose, maltose, glucose syrup and/or maltodextrine, used in combination with a starch, especially with a starch of cereal origin.

6. Powdered mousse mix according to claim 5, **characterized in that** the starch is in form of a cereal flour selected in the group comprising wheat, maize, rice, oat, barley, rye, buckwheat and millet flour, used alone or in combination.

7. Powdered mousse mix according to claim 6, **characterized in that** the flour is a pregelatinized flour.

8. Powdered mousse mix according to claim 1, **characterized in that** the source of protein is selected from the group comprising milk proteins, skimmed milk powder, whey powder, caseinate, yoghurt powder or any other fermented dairy based powder, soy proteins, pulses proteins and wheat proteins, used alone or in combination.

9. Powdered mousse mix according to claim 1, **characterized in that** the source of fat is selected from the group comprising milk fat, palm fat, coconut fat, peanut oil and sunflower oil, used alone or in combination.

10. Powdered mousse mix according to claim 8 or 9, **characterized in that** the milk origins from either cow, buffalo, sheep, goat, camel or any other domestic animal.

11. Powdered mousse mix according to claim 9, **characterized in that** the amount of fat ranges from about 3 to 30%, preferably from 5 to 25% by weight of the mix.

12. Powdered mousse mix according to claim 1, **characterized in that** it further comprises a powdered vegetable.

13. Powdered mousse mix according to claim 12, **characterized in that** the powdered vegetable is selected from the group comprising carrot, cauliflower, tomato, pumpkin and potato powder, used alone or in combination.

14. Powdered mousse according to claim 1, **characterized in that** it contains a source of fruit.

15. Powdered mousse mix according to claim 14, **characterized in that** the source of fruit is selected from the group comprising fruit extract, fruit aroma and dehydrated fruit purée.

16. Powdered mousse mix according to claim 1, **characterized in that** the granulometry of the powder ranges from 200 to 500 microns.

17. Powdered mousse mix according to claim 1, **characterized in that** it contains pieces of food distinguishable with the naked eye.

18. Powdered mousse mix according to claim 17, **characterized in that** the pieces of food are selected from the group comprising dried fruits, nuts, cereal flakes, pieces of cereals, pieces of dried vegetable, pieces of crustacea and pieces of cheese.

19. Method for quickly reconstituting a mousse by gently and shortly stirring with a liquid, a powdered mousse mix according to any of the preceding claims.

20. Method according to claim 19, **characterized in that** the liquid is selected from the group comprising water, milk, cream, fruit juice and vegetable or meat bouillon.

21. Method according to claim 20,**characterized in that** the temperature of the liquid ranges from 5 to 100°C, preferably from 30 to 80°C.

22. Use of a gas generating ingredient comprising a matrix containing carbohydrate and protein and entrapped gas under pressure, the gas being present in an amount to release at least 1 ml of gas per gram of gas generating ingredient at ambient conditions upon contacting with liquid, in a powdered food mix containing a source of proteins, a source of carbohydrates and a source of fat for the reconstitution of a mousse by addition of the powdered food mix to the liquid and gentle stirring.

23. Use according to claim 22, **characterized in that** the gas generating ingredient contains gas under a pressure of from 100 kPa to 6 MPa.
